# EUROPEAN PATENT APPLICATION

(11) **EP 3 680 365 A1**
(43) Date of publication of application: **15.07.2020**
(21) Application number: 20156132.1
(22) Date of filing: 14.07.2014
(51) Int. Cl.: C25B 1/10, C25B 1/24, C25B 1/46, C25B 3/04, C25B 9/18, C25B 15/08, C07C 51/02

(54) **INTEGRATED METHOD FOR PRODUCING OXALIC ACID AND CO-PRODUCTS**

(30) Priority: 19.06.2014 US 201462014465 P
(62) Divisional of application: 14895127.0
(71) Applicant: Avantium Knowledge Centre B.V., 1014 BV Amsterdam (NL)
(72) Inventor: KACZUR, Jerry, J, North Miami Beach, FL Florida (US); LAKKARAJU, Prasad, East Bronswick, NJ New Jersey (US)
(74) Representative: Dijkhuis ev Boon, Anouk Hélène J.

(57) **Abstract**

A method for producing oxalic acid and co-products, comprising:
receiving an anolyte feed including a alkali metal halide at an anolyte region of a first electrochemical cell including an anode;
receiving a catholyte feed including carbon dioxide and an alkali metal bicarbonate at a catholyte region of the first electrochemical cell including a cathode;
applying an electrical potential between the anode and the cathode of the first electrochemical cell sufficient to reduce the carbon dioxide to formate and to oxidize the alkali metal halide to a halogen, to produce an anolyte product stream comprising halogen and a catholyte product stream,
splitting catholyte product stream in a solution stream comprising formate and alkali metal bicarbonate;
splitting solution stream comprising formate and alkali metal bicarbonate into a recycle stream and a second product stream,
converting the formate to an alkali metal oxalate via a thermal reaction;
receiving the alkali metal oxalate at a first electrochemical acidification electrolyzer;
converting the alkali metal oxalate to oxalic acid and co-producing alkali metal hydroxide, hydrogen, carbon dioxide and oxygen in the first electrochemical acidification electrolyzer;
acidifying at least a portion of recycle stream in a second electrochemical acidification electrolyzer to produce an acidified product stream to reenter the recycle stream to produce a solution stream; and
feeding solution stream to catholyte region.

## Description

### TECHNICAL FIELD

The present disclosure generally relates to the field of electrochemical reactions, and more particularly to methods for producing carboxylic acids from carbon dioxide and co-producing halogen products.

### BACKGROUND

The combustion of fossil fuels in activities such as the electricity generation, transportation, and manufacturing produces billions of tons of carbon dioxide annually. Research since the 1970s indicates increasing concentrations of carbon dioxide in the atmosphere may be responsible for altering the Earth's climate, changing the pH of the ocean, and other potentially damaging effects. Countries around the world, including the United States, may be seeking ways to mitigate emissions of carbon dioxide.

One implementation may be to convert carbon dioxide into economically valuable materials such as fuels and industrial chemicals. If the carbon dioxide may be converted using energy from renewable sources, it will be possible to both mitigate carbon dioxide emissions and to convert renewable energy into a chemical form that may be stored for later use. Electrochemical and photochemical pathways may be likely mechanisms for carbon dioxide conversion.

### SUMMARY OF THE PREFERRED EMBODIMENTS

The present disclosure is a method for producing oxalic acid and co-products, comprising:
receiving an anolyte feed (522) including a alkali metal halide at an anolyte region (504) of a first electrochemical cell (502) including an anode;
receiving a catholyte feed (548) including carbon dioxide and an alkali metal bicarbonate at a catholyte region (506) of the first electrochemical cell (502) including a cathode;
applying an electrical potential between the anode and the cathode of the first electrochemical cell sufficient to reduce the carbon dioxide to formate and to oxidize the alkali metal halide to a halogen, to produce an anolyte product stream (508) comprising halogen and a catholyte product stream (524);
splitting catholyte product stream (524) in a solution stream (530) comprising formate and alkali metal bicarbonate;
splitting solution stream (530) comprising formate and alkali metal bicarbonate into a recycle stream (532) and a second product stream (531);
converting the formate to an alkali metal oxalate (570) via a thermal reaction;
receiving the alkali metal oxalate (574) at a first electrochemical acidification electrolyzer (576);
converting the alkali metal oxalate to oxalic acid (580) and co-producing alkali metal hydroxide (578), hydrogen, carbon dioxide (579) and oxygen in the first electrochemical acidification electrolyzer;
acidifying at least a portion of recycle stream (532) in a second electrochemical acidification electrolyzer (540) to produce an acidified product stream (546) to reenter the recycle stream to produce a solution stream (548); and
feeding solution stream (548) to catholyte region (506).

The method may further include such method wherein the second electrochemical acidification electrolyzer (540) further produces hydrogen, oxygen and alkali metal hydroxide.

The method may further include feeding product stream (531) to an evaporator-crystallizer (550) to produce an alkali metal formate stream (554), an alkali metal bicarbonate stream slurry (556) and an alkali metal bicarbonate stream product stream (558).

The method may further include providing a portion of the alkali metal bicarbonate stream slurry (556) or alkali metal bicarbonate product stream (558) to a reactor-dissolver (561) and converting alkali metal carbonate to alkali metal bicarbonate using a carbon dioxide gas stream (563).

The method may further include providing an alkali metal bicarbonate stream (536) from reactor-dissolver (561) to recycle stream (532).

The method may further include a reactor-dissolver (561) having an alkali metal hydroxide input stream, and wherein the alkali metal hydroxide is supplied from one or both of the electrochemical acidification electrolyzers (540) and (576).

The method may further include the alkali metal halide being at least one of
sodium chloride, potassium chloride, sodium bromide or potassium bromide. The method may further include the anolyte feed to the first electrochemical cell comprising saturated sodium chloride brine.

The method may further include separating anolyte product stream (508) from anolyte compartment (504) in a chlorine gas stream (510) and a sodium chloride-depleted brine solution (512), and wherein sodium chloride-depleted depleted brine solution stream (512) is processed to produce a purified saturated sodium chloride brine solution stream (522) which is provided to anolyte region (504) of a first electrochemical cell (502). Such method may further include producing one or more of sodium bicarbonate, sodium hydroxide and chlorine as by-products. Such method may further comprise reacting the chlorine with an alkali metal hydroxide to produce an alkali metal hypochlorite product, preferably the generation of sodium hypochlorite by reaction with NaOH.

The method may further include converting the formate to the alkali metal oxalate via the thermal reaction includes receiving a catalyst (567), wherein preferably the catalyst is selected from the group consisting of alkali metal hydroxides, alkali metal ethoxides, alkali metal methoxides, and alkali metal hydrides. Such method may further include converting the oxalic acid to an oxalic acid ester with an alcohol. Such method may further include converting the oxalic acid ester to ethylene glycol by hydrogenation. Such method may further comprise reacting the halogen with an organic compound to produce a halogenated organic compound, wherein preferably the organic compound is at least one of ethylene or propylene.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWING

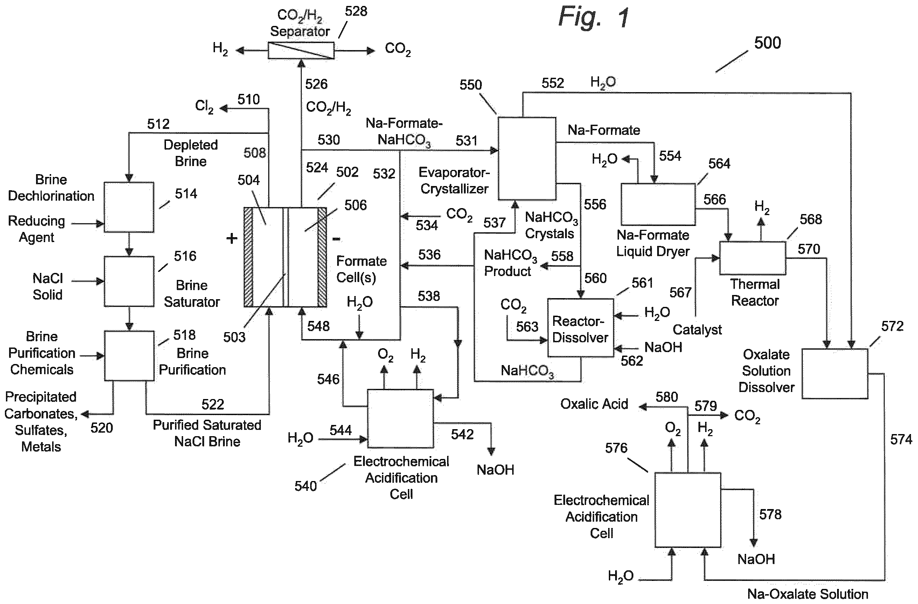

Fig. 1 shows a system for production of alkali metal formate using carbon dioxide and utilizing a alkali metal chloride brine in the anolyte to co-produce chlorine and alkali metal bicarbonate in accordance with an embodiment of the present disclosure.

### DETAILED DESCRIPTION

Reference will now be made in detail to the subject matter disclosed, which is illustrated in the accompanying drawing.

The present disclosure describes a method and system for production of carboxylic based chemicals, including carboxylic acids and salts. The method may employ an electrochemical cell reaction to produce carbon monoxide, CO, or alkali metal formate from a carbon dioxide feedstock. A thermal reaction with an alkali metal hydroxide, may be used to combine, for example, two alkali metal formate molecules, into a alkali metal oxalate product.

The alkali metal oxalate may be then converted to oxalic acid by a membrane based electrochemical acidification process, where protons (H⁺ ions) formed at the anode may be used to replace the alkali metal ions, and the alkali metal ions (M⁺) may be captured as alkali metal hydroxide (MOH) at the cathode, and may be recycled to be used as the alkali metal hydroxide used in the intermolecular condensation process unit operation.

Alternatively the alkali metal oxalate may be converted to oxalic acid through treatment with mineral acid, such as HCl, HBr, HI, H₂SO₄, H₃PO₄, or the like. For example, treating sodium oxalate with aqueous HCl may result in an oxalic acid solution comprising NaCl. The oxalic acid may be extracted from the solution via extraction with an organic solvent such as alcohol, ether, halo-organic, ketone, amide, or ester. Useful solvents include, but are not limited to, methanol, ethanol, propanol, diethyl ether, methyl ethyl ether, methyl tert-butyl ether, tetrahydrofuran, dioxane, methylene chloride, chloroform, carbon tetrachloride, chlorobenzene, di-chlorobenzene, methyl acetate, ethyl acetate, methyl propionate, ethyl propionate, acetone, butanone, dimethylformamide, N-methyl pyrrolidone, and the like. The oxalic acid may also be recovered from the solution through crystallization from the aqueous solution. Crystallization may require concentrating the solution and/or cooling the solution.

After removal of oxalic acid, the aqueous solution comprising salt, NaCl for example, may be recycled by sending it to an anolyte compartment of an electrochemical cell. Halide ions, for example chloride, may be oxidized to form halogen (for example chlorine). The halogen may be isolated from an anolyte stream after exiting an anolyte compartment of an electrochemical cell. The halogen may be reacted with hydrogen, for example hydrogen produced during a thermal alkali metal formate to alkali metal oxalate calcination reaction. Hydrogen may also be obtained from another source. The mineral acid (HCl for example) formed by the reaction of hydrogen with halogen may be used to acidify alkali metal oxalate, completing the cycle. The energy produced (heat or electrical energy) by reacting halogen with hydrogen may be captured and used in the process of the invention (in the thermal calcination reaction for example) or may be used elsewhere.

Before any embodiments of the disclosure are explained in detail, it is to be understood that the embodiments may not be limited in application per the details of the structure or the function as set forth in the following descriptions or illustrated in the figures. Different embodiments may be capable of being practiced or carried out in various ways. Also, it is to be understood that the phraseology and terminology used herein is for the purpose of description and should not be regarded as limiting. The use of terms such as "including," "comprising," or "having" and variations thereof herein are generally meant to encompass the item listed thereafter and equivalents thereof as well as additional items. Further, unless otherwise noted, technical terms may be used according to conventional usage. It is further contemplated that like reference numbers may describe similar components and the equivalents thereof.

Fig. 1 shows schematic drawing of system 500, an embodiment in operating a system utilizing a sodium-based compound that may generate, for example, sodium formate from the electrochemical reduction of carbon dioxide followed by the conversion of the sodium formate to sodium oxalate, which may then be converted to oxalic acid. The system produces oxalic acid in addition to two additional co-products, which may be sodium bicarbonate and sodium hydroxide.

Formate cell 502 may comprise catholyte compartment 506 and anolyte compartment 504, and ion permeable separator 503, preferably being a cation ion exchange type membrane. A feed stream 522 of saturated NaCl brine may be introduced into catholyte compartment 504 of formate cell 502, where the chloride ion of the NaCl salt solution may be oxidized to chlorine gas at the anode in anode compartment 504. As the chloride ion of the NaCl salt may be oxidized at the anode, sodium ions migrate in the potential field, and pass through separator 503 into cathode compartment 506.

The anolyte product stream 508 from catholyte compartment 504 comprises a mixture of chlorine gas and NaCl depleted brine solution. The chlorine gas may then be separated or disengaged as stream 510 from stream 508 as a co-product, and the separated depleted brine solution stream 512 may then be processed in a series of steps typically used in chlor alkali processes comprising dechlorination of the depleted brine, resaturation of the brine solution with NaCl using a bed of solid NaCl salt, followed by a brine purification step to remove impurities, such as metals and hardness (such as Ca⁺, Mg⁺, and Ba⁺), from the brine solution to impurity levels typically used to achieve long life operation of separator 503, to produce a purified saturated NaCl brine solution stream 522 which is electrolyzed in the anolyte compartment 504 of formate cell 502.

Chlorine gas 510 may then be processed in various ways, such as removal of water from the gas by condensation, and then the chlorine gas may then be used for producing various useful co-products from the system, for example, the generation of sodium hypochlorite by a reaction with NaOH, the generation of HCl through reaction with hydrogen, as well as reactions with organics, such as to produce EDC (ethylene dichloride) by reaction with an external supply of ethylene. Many other reaction co-products made with the chlorine gas 510 may be envisioned.

Brine dechlorination unit 514 may be used to remove residual chlorine from depleted brine solution 512 using a selected reducing agent, which may be chosen from those typically used such as sodium sulfite, sodium hydrosulfite, and hydrogen peroxide among others. The dechlorinated brine then may be passed to brine saturator unit 516, where the depleted brine NaCl concentration may be increased from a typical 150 - 240 gm/L as NaCl to a concentration of 300 - 320 gm/L as NaCl using a brine saturator, which may consist of a bed of solid salt crystals in an apparatus typically called a briner. The saturated brine may then be passed through brine purification system 518, which may consist of chemical precipitation steps for the removal of most of the hardness in the solution, typically by the addition of NaOH and sodium carbonate under alkaline conditions, followed by filtration to remove the precipitated hardness containing solids, then followed by an ion exchange purification step utilizing chelating ion exchange resin beds to reduce the hardness levels in the brine to typically 20 - 50 ppb or less. The sulfate component in the brine may be reduced by the chemical precipitation, or by the use of commercial system that utilizes nanofiltration to preferentially remove sulfate from brine, for example the SRS system - sold by Aker Chemetics. The purification chemicals also may include HCl and NaOH used for regenerating the chelating ion exchange columns. Stream 520 may be an effluent stream containing the precipitated carbonates, sulfates, and metals effluent from the purification of the saturated brine solution, which may be processed and recycled back to the process with a minimum amount of material requiring disposal. Purified brine solution 522 may then pass into anolyte compartment 504 of electrochemical formate cell 502. The recirculation of the anolyte loop is not shown, but the brine flow rate may be metered so as to maintain the desired brine concentration in the electrochemical cell anolyte loop and overflow stream 508, with the brine concentration typically in the range of 150 - 240 gm/L as NaCl. In an embodiment, the anolyte brine concentration may be operated lower NaCl concentrations, to as low as about 100 - 140 gm/L, which may result in a decrease in chlorine efficiency and the generation of more byproduct oxygen in the chlorine gas stream, but which may be useful in reducing the brine flow rate through the brine purification system with a reduction in brine processing costs.

Solution feed stream 548, which may be an aqueous mixture of sodium formate, sodium bicarbonate, and dissolved carbon dioxide which may include a gaseous carbon dioxide component which may be in the form of gaseous microbubbles, may be passed into catholyte compartment of electrochemical cell 502. In catholyte compartment 506, which preferably incorporates a high surface area cathode structure, carbon dioxide may be electrochemically reduced to formate, and the formate may combine with the sodium ions (Na⁺) passing through the adjacent separator 503 to form sodium formate. In addition, any cathode inefficiency side reactions forming hydrogen (H₂) at the cathode may produce hydroxide ions (OH⁻), and these hydroxide ions may react with carbon dioxide to form sodium carbonate in the catholyte solution. The sodium carbonate may then further react with excess carbon dioxide to form sodium bicarbonate. In addition, it is believed that the other sodium ions may combine with carbonic acid and the other potential carbon dioxide equilibrium species at the operating catholyte pH to further form additional sodium carbonate and sodium bicarbonate.

The reduction reaction products may exit as stream 524, where they may be separated or disengaged into gas stream 526 and solution stream 530. Gas stream 526 may be passed into separator 528, which may separate carbon dioxide from any byproduct hydrogen so that they may be reused or recycled in the other system 500 unit operations. Gas separator 528 may be any suitable membrane-based or molecular sieve pressure swing gas separation unit technology that may be capable of the separation of carbon dioxide and hydrogen. The separated gases may then be further purified and compressed as needed for recycle or reuse to the process.

Solution stream 530 comprising mainly sodium formate and sodium bicarbonate may then be split into recycle stream 532, which may be recycled back to electrochemical formate cell 502 catholyte compartment, and product stream 531 which may go to evaporator-crystallizer 550. Recycle stream 532 may have several input streams, including the introduction-of-carbon-dioxide stream 534, optionally a sodium bicarbonate stream 536 from reactor-dissolver unit 560, a side stream 538 leaving stream 532 which may go into an optional electrochemical acidification cell A 540 and may have an acidified product stream 546 back into stream 532, and may have the addition of water to the stream as needed to prevent precipitation in stream 532 and catholyte compartment 506, and having all of the inputs/outputs into stream 532 ending up as solution stream 548 which may be sent into catholyte compartment 506.

Electrochemical acidification cell 540 may be used to acidify a small portion taken from catholyte loop stream 532, and which may reenter anolyte recycle stream 532 as stream 546.

The cell anolyte solution of electrochemical acidification cell 540 may utilize sulfuric acid such that the anode reaction produces oxygen and produces hydrogen ions, which may be used to acidify formate stream 538 as it passes through the ion exchange compartment in the cell. The cathode reaction in this cell may be the reduction of water, which produces hydrogen gas and hydroxide ions (OH⁻). The sodium ions that may be displaced by the hydrogen ions passing into the ion exchange compartment may pass into the catholyte compartment to combine with the hydroxide ions to produce a sodium hydroxide co-product. The hydrogen gas may also be captured for use in the process. Deionized water may be used in acidification cell 540 as needed to replace electrolyzed water and for controlling the concentration of the NaOH in the catholyte compartment.

Catholyte product stream 531, which may contain high concentrations of alkali metal formate and alkali metal bicarbonate may then be passed to evaporator-crystallizer unit 550, which may evaporate sufficient water from the solution and continuously precipitate a alkali metal bicarbonate crystal product as stream 556, a liquid concentrated alkali metal formate stream 554, and a water product stream 552 which may be condensed and used elsewhere as needed in the process, such as in oxalate solution dissolver 572. Evaporator-crystallizer 550 may utilize steam for providing the energy requirements for evaporating the water from the stream 531 input stream to the unit. Evaporator-crystallizer 550 may be a multiple evaporator effect unit, consisting of multiple units to efficiently utilize the energy of the input steam, or any other suitable types of units may be utilized.

In addition, evaporator-crystallizer 550 may use steam as well as mechanical means for producing a vacuum to further reduce the energy requirements for the evaporation of the water from the solution. Any suitable evaporator-crystallizer unit or system may comprise suitable metallurgy for the operating conditions of the system. Alkali metal formate may have a solubility in water that may be about 8 to 10 times more than that of alkali metal bicarbonate, so the solubility difference allows the easy separation of alkali metal formate from alkali metal bicarbonate using solution temperature differences to enhance the separation. Other methods for the separation of alkali metal formate from alkali metal bicarbonate may be employed including fractional crystallization, falling film crystallization, and the like. A continuous process for the separation may be preferred, although batch processing may also be used.

The alkali metal bicarbonate crystal stream 556 from unit 550 may be in the form of an aqueous slurry, which may then be separated, washed, and dried by any suitable means to produce a dried alkali metal bicarbonate product 558. Equipment such as centrifuges and vacuum belt filters may be used for the separation of the alkali metal bicarbonate crystals from the 556 stream slurry, and the mother liquor from any water rinses may be recycled back to unit 550. The alkali metal bicarbonate product 558 may also be recrystallized or further purified by any suitable means to obtain a final product with purity suitable for specialty uses, such as food grade quality product. A portion of the stream 556 slurry or stream 558 alkali metal bicarbonate product as stream 560 may be utilized in reactor-dissolver 561, which may be used to convert alkali metal carbonate to alkali metal bicarbonate using an additional carbon dioxide gas stream 563. Reactor-dissolver 561 may also have an NaOH input stream 562, which may then be converted to alkali metal bicarbonate. The NaOH may be supplied from one or both of the electrochemical acidification units 540 and 576 if required.

Alkali metal formate stream 554 may be a concentrated alkali metal formate solution that contains 50 wt% or less water, and preferably 40 wt% or less water, and more preferably 30 wt% or less water. The formate solution stream 554 may be viscous and may contain from 0.1 wt% to 30 wt% alkali metal bicarbonate depending on the water solubility of alkali metal bicarbonate in the alkali metal formate solution. The solution concentrations of the alkali metal formate and residual alkali metal carbonate may be varied as needed to achieve the desired final residual alkali metal bicarbonate concentration in the alkali metal formate solution. Alkali metal formate stream 554 may then passed to alkali metal formate liquid dryer where the residual water may be removed by any suitable means such as by vacuum evaporation and the like. The alkali metal formate may be an alkali metal formate melt, consisting of a small percentage of water, in the range of 0.01 wt% to 5 wt% as water, and may have between 0.1 wt% to 20 wt% alkali metal bicarbonate. The alkali metal formate melt stream 566 may then be passed into alkali metal formate thermal reactor 568 for high temperature conversion of the alkali metal formate to alkali metal oxalate (calcination). A suitable catalyst 567, such as NaOH, sodium hydride, sodium borohydride, sodium ethoxide, sodium methoxide, KOH, KH, KOEt, KOMe, KOtBu and the like may be added into the sodium formate before it enters thermal reactor 568. The introduction of catalyst 567 may help to reduce the calcination temperature and improve the conversion yield of alkali metal formate to alkali metal oxalate to a range of 50% to 99% or more, and preferably 70% to 99% or more. The reaction may also provide suitable yields without the need for the addition of catalyst 567. Hydrogen may be a major byproduct reaction from thermal reactor 568 and may be recovered for use in the process. Thermal reactor 568 may be operated in different configurations, such as under a partial vacuum, under an inert atmosphere such as nitrogen, or with the use of any suitable gas that may improve the efficiency of the chemical conversion of the formate to oxalate. The addition of other chemicals to thermal reactor 568 may also be useful, so as to obtain a clean flowing purified product. Thermal reactor 568 may be any suitable type equipment that may heat the alkali metal formate to suitable temperatures and control the thermal or calcination atmosphere. Thermal reactor 568 may include tunnel furnaces, rotary kilns, high temperature spray dryers, high temperature rotating drum/flaker units, fluid bed reactors, and other commercial calcining equipment and designs that may be commercially available.

The alkali metal oxalate product stream 570 leaving thermal reactor 568 may be cooled, and passed to oxalate solution dissolver 572, where alkali metal oxalate solids are dissolved in water, and may be filtered by various available methods to remove any insoluble materials and obtain a clear, filtered product solution, free of suspended solids. The alkali metal oxalate product may contain alkali metal carbonate and/or alkali metal bicarbonate as byproduct(s) of the calcination. The solution may be concentrated sufficiently so that the alkali metal oxalate/alkali metal bicarbonate solution may not require a larger amount of energy or steam for water evaporation in evaporator-crystallizer 576.

Alkali metal oxalate solution stream 574 may then be passed to electrochemical acidification cell 576, where the alkali metal oxalate solution passes through the ion exchange compartment of the cell and may be converted to oxalic acid stream 580 and carbon dioxide stream 579 which may produced from the acidification of any alkali metal carbonate present in alkali metal oxalate stream 574. Electrochemical acidification cell 576 may utilize the same chemistry and configuration as electrochemical acidification cell 540, producing oxygen and hydrogen a co-products, as well as NaOH as stream 578.

### Formate CO₂ Reduction Chemistry

The postulated chemistry of the reduction of CO₂ at the cathode may proceed as follows.

Hydrogen atoms may be adsorbed at the electrode from the reduction of water as shown in equation (1).

H⁺ + e⁻ → H_{ad} (1)

Carbon dioxide may be reduced at the cathode surface with an adsorbed hydrogen atom to form formate, which may be adsorbed on the surface as shown in equation (2) as follows:

CO₂ + H_{ad} → HCOO_{ad} (2)

The formate adsorbed on the surface then reacts with another adsorbed hydrogen atom to form formic acid that may be released into the solution as shown in equation (3):

HCOO_{ad} + H_{ad} → HCOOH (3)

A competing reaction at the cathode may be the reduction of water where hydrogen gas may be formed as well as hydroxide ions as shown in equation (4):

2H₂O + 2e⁻ → H₂ + 2OH⁻ (4)

Operating the electrochemical cell at higher pressures (above atmospheric), may increase the current efficiency and allow operation of the cells at higher current densities.

### Anode Reactions

The anode reaction may be the oxidation of water into oxygen and hydrogen ions as shown in equation (5) as follows:

2H₂O → 4H⁺ + 4e⁻ + O₂ (5)

Below may be the various preferred and alternative embodiments for the process, arranged in different categories.

### Formate Formation From CO

The thermal intermolecular reaction of alkali metal formate CO with KOH may be as shown in equation (6) follows:

CO + KOH → HCOOK (6)

The KOH may be consumed in the reaction. Under the right conditions, both formate and oxalate may both be produced, and which may decrease the number of process steps. The production of both would require the separation of these carboxylic acids from each other.

Carbon monoxide may also be selectively absorbed in a alkali metal carbonate and bicarbonate aqueous solutions to produce formate, where M may be an alkali metal which may be shown as in equations (7) and (8) as follows:

CO + MHCO3 → MOOCH + CO₂ (7)

2CO + M₂CO₃ + H₂O → 2MCOCH + CO₂ (8)

These reactions may not require MOH, such as NaOH or KOH, in the reaction for the formation of M-formate as catalysts.

### Oxalate From Formate

The thermal intermolecular reaction of alkali metal formate with KOH may be as shown in equation (9) as follows:

2HCOOK + KOH → K₂C₂O₄ + H₂ (9)

Optionally, sodium or potassium carbonate may also be used for converting formate to oxalate, but the conversion yields have been shown to be significantly lower. Under the right operating conditions and temperatures, the yields may be significantly improved.

### Anode Oxidation Reactions

The anode reaction when utilizing sulfuric acid in the anolyte, is the oxidation of water generating hydrogen ions and oxygen as shown in equation (10) as follows:

2H₂O → O₂ + 4H⁺ + 4e⁻ (10)

If hydrobromic acid, HBr, is used in the anolyte, the reaction is the oxidation of the bromide to bromine as follows:

2HBr → Br₂ + 2H⁺ + 2e⁻ (11)

If sodium chloride, NaCl, may be used in the anolyte, the anode reaction, such as in the formate cell in Fig. 1, is the oxidation of the chloride ion as shown in equation (12) as follows:

2 NaCl → Cl₂ + 2Na⁺ + 2e⁻ (12)

Sodium ions may pass through the ion permeable separator from the anolyte compartment to the catholyte compartment and combine with any formate from the reduction of carbon dioxide to form sodium formate and any by-product hydroxide ions formed from the reduction of water at the cathode may form NaOH.

If hydrochloric acid, HCl, may be used in the anolyte, the reaction may be the oxidation of the chloride to chlorine with the co-production of hydrogen ions as shown in equation (13) as follows:

2HCl ---> Cl₂ + 2H⁺ + 2e⁻ (13)

### Carbonate and Bicarbonate Reactions

Sodium carbonate, Na₂CO₃, dissolved in solution may be converted to sodium bicarbonate, Na₂HCO₃, with reaction with CO₂ as shown in equation (14) as follows:

Na₂CO₃ + CO₂ + H₂O → 2NaHCO₃ (14)

Sodium hydroxide, NaOH, reaction with CO₂ in solution may be converted to sodium carbonate, Na₂CO₃, as shown in equation (15) as follows:

2NaOH + CO₂ + H₂O → 2Na₂CO₃ + H₂O (15)

### Chlorine Reaction With NaOH

Sodium hydroxide, NaOH, may be reacted with chlorine to produce sodium hypochlorite, NaOCl, as shown in equation (16) as follows:

2NaOH + Cl₂ → NaOCl + NaCl + H₂O (16)

### Electrolyzer Configurations

The following present various exemplary combinations of cell configurations, electrode structures, and anolyte/catholyte compositions that may be used in the electrochemical CO and/or formate, and electrochemical acidification (EA) electrolyzers in the above described processes.

The cathode of an electrochemical cell and electrochemical acidification electrolyzer may be a high surface area electrode. The void volume for the cathode may be from about 30% to 98%. The surface area of the cathode may be from 2 cm²/cm³ to 2,000 cm²/cm³ or higher. The surface areas may be further defined as a total area in comparison to the current distributor/conductor back plate area with a preferred range of from 2 to 1000 times the current distributor/conductor back plate area.

The cathode of an electrochemical cell may be electrolessly plated indium or tin on a copper woven mesh, screen or fiber structure. Indium-copper intermetallics may be formed on the copper woven mesh, screen or fiber structure. The intermetallics may be harder than the soft indium metal, and allow better mechanical properties in addition to usable catalytic properties. The indium electrocatalyst coating may also be prepared by electroplating indium onto a suitable corrosion resistant metal substrate, such as a tin plated copper or tin plated stainless steel metal high surface area substrate. Alternatively, the indium can be plated onto a high surface area carbon substrate, such as a carbon felt or cloth composed of fibers, which may already have an applied tin-based coating. Also, the indium electrocatalyst may be applied by co-electroplating a mixture of indium with another metal, such as Sn, Zn, Bi, or Pb, onto a suitably prepared coated metal or carbon substrate, such that the coating is physically and chemically compatible with the applied indium/co-metal electroplated external layer. Suitable indium-based electrocatalytic coatings are corrosion resistant to the catholyte solutions, salts, and operating pH of the catholyte.

In the electrochemical reduction of carbon dioxide metals including Pb, Sn, Hg, Tl, In, Bi, and Cd among others may produce formic acid (or formate) as a major C₁ product in aqueous solutions. Alloy combinations of these metals such as Hg/Cu, Sn-Cd, Sn-Zn, Cu-Sn, may form at various performance efficiencies. One of the issues may be that a number of these metals, such as Sn and Cu, may be that the surface changes and deactivates or loses the Faradaic conversion activity in producing formate. The surface then may have to be reactivated by a reverse current or polarity. In the production for formation of C₂₊ chemicals, such as oxalic acid and glycolic acid, metals such as Ti, Nb, Cr, Mo, Ag, Cd, Hg, Tl, As, and Pb as well as Cr-Ni-Mo steel alloys among many others may result in the formation of these higher C₂₊ products.

In another embodiment, the cathode surfaces may be renewed by the periodic addition of indium salts or a mix of indium/tin salts in situ during the electrochemical cell operation. An electrochemical cell may be operated at full rate during operation, or temporarily operated at a lower current density with or without any carbon dioxide addition during the injection of the metal salts.

In another exemplary embodiment, in preparing cathode materials for the production of C₂₊ chemicals, the addition of metal salts that may reduce on the surfaces of the cathode structure may be also used, such as the addition of Ag, Au, Mo, Cd, Sn, etc. to provide a catalytic surface that may be difficult to prepare directly during cathode fabrication or for renewal of the catalytic surfaces.

In another exemplary embodiment, Magneli phase titanium oxides, in particular Ti₄O₇ may be used as a cathode base material, which may also be impregnated or coated with one or more of the aforementioned suitable cathode metals, which may include Ag, Au, In, Mo, Cd, Sn, Cu, Hg, Tl, Bi, Ti, Nb, Zr, As, Cr, Co, Zn, Pb, and their alloys and combinations. These magneli phase materials may be in the form of three dimensional porous materials in the shape of plates, foams, pellets, powders, and the like. One manufacturer, Atraverda, Ltd., manufactures these under the tradename of Ebonex.

Anions used for CO production at the cathode may be any species stable at working potentials such as sulfate, chloride or bicarbonate. CO₂ reduction to CO may favor high pH due to limited competing H₂ formation; however there may be a practical pH maximum at around 8.5 for a saturated CO₂ solution due to the formation of carbonic acid on dissolution. There may be no strict lower limit that may have been observed. Depending on the chemistry of the system, the pH of the catholyte region of electrochemical cell 110 may range from 3 to 12. The pH may be a function of the catalysts used, such that there may be no corrosion at the electrochemical cell 110 and catholyte operating conditions.

The electrochemical cell catholyte solution may also comprise an aqueous or non-aqueous based solution. The solution may contain an organic solvent, for example methanol or ethanol, that may help provide a higher solubility of carbon dioxide in the solution over that of aqueous solutions. The organic solvent may be fully soluble in the aqueous catholyte solution or may also be present as an emulsion in the catholyte solution. The solvent may be a polar or aprotic type solvent. Solvents may include carbonates, such as propylene carbonate, acetone, alcohols - including primary, secondary, and tertiary types, dimethyl sulfoxide, dioxane, aromatic hydrocarbons such as toluene and cyclohexane, chlorinated as well as fluorinated solvents such as chloroform, aprotic solvents such as acetonitrile, and the like. An aqueous solvent in this disclosure is defined as a solution containing less than 50 wt% of organics in comparison to the water content. The organics may be chosen in regards to improving carbon dioxide solubility in the solution, as a moderator of the catholyte salt solubility such as formate, and in improving or enabling the cathode chemistry in the formation of C2+ compounds, which may be promoted by the use of the organics which exclude water in the cathode reaction. Examples of a C2+ carbon dioxide reduction products are oxalate, glycolate, and glyoxylates. Other carbon dioxide products may include acetic acid, ethanol, methanol, as well as others.

Electrolytes for the anolyte region of an electrochemical cell may include: alkali metal hydroxides, (e.g. as KOH, NaOH, LiOH) in addition to ammonium hydroxide; inorganic acids such as sulfuric, phosphoric, and the like; organic acids such as methanesulfonic acid in both non-aqueous and aqueous solutions; and alkali halide salts, such as the chlorides, bromides, and iodine salts such as NaF, NaCl, NaBr, LiBr, KF, KCl, KBr, Kl, and Nal, as well as their hydrogen halide forms, such as HCl, HF, HI, and HBr. The alkali halide salts may produce, for example, fluorine, chlorine, bromine, or iodine as halide gas or dissolved aqueous products from the anolyte region. Methanol or other hydrocarbon non-aqueous liquids may also be used, and they would form some oxidized organic products from the anolyte. Selection of the anolyte would be determined by the process chemistry product and requirements for lowering the overall operating cell voltage. For example, using HBr as the anolyte, with the formation of bromine at the anode, which require a significantly lower anode voltage potential than chlorine formation. Hydriodic acid, HI, may form iodine at anode potential voltages even lower than that of bromine.

Preferred anolytes for the system include alkali metal hydroxides, such as KOH, NaOH, LiOH; ammonium hydroxide; inorganic acids such as sulfuric, phosphoric, and the like; organic acids such as methanesulfonic acid; non-aqueous and aqueous solutions; alkali halide salts, such as the chlorides, bromides, and iodine types such as NaCl, NaBr, LiBr, and Nal; and hydrogen halides such as HCl, HBr and HI. The hydrogen halides and alkali halide salts will produce for example chlorine, bromine, or iodine as a halide gas or as dissolved aqueous products from the anolyte compartment. Methanol or other hydrocarbon non-aqueous liquids can also be used, and would form some oxidized organic products from the anolyte. Selection of the anolyte would be determined by the process chemistry product and requirements for lowering the overall operating cell voltage. For example, the formation of bromine at the anode requires a significantly lower anode voltage potential than chlorine formation, and iodine is even lower than that of bromine. This allows for a significant power cost savings in the operation of both of the electrochemical units when bromine is generated in the anolyte. The formation of a halogen, such as bromine, in the anolyte may then be used in an external reaction to produce other compounds, such as reactions with alkanes to form bromoethane, which may then be converted to an alcohol, such as ethanol, or an alkene, such as ethylene, and the halogen hydrogen halide byproduct from the reaction can be recycled back to the electrochemical cell anolyte.

Catholyte cross sectional area flow rates may range from 2 to 3,000 gpm/ft² or more (0.0076 - 11.36 m³/m²). Flow velocities may range from 0.002 to 20 ft/sec (0.0006 to 6.1 m/sec).

Catholyte region of the electrochemical cell 110 may include at least one catalyst. The catalyst may be a homogeneous heterocyclic catalyst which may be utilized in the catholyte region to improve the Faradaic yield to formate. Homogeneous heterocyclic catalysts may include, for example, one or more of pyridine, tin 2-picoline, 4-hydroxy pyridine, adenine, a heterocyclic amine containing sulfur, a heterocyclic amine containing oxygen, an azole, a benzimidazole, a bipyridine, a furan, an imidazole, an imidazole related species with at least one five-member ring, an indole, a lutidine, methylimidazole, an oxazole, a phenanthroline, a pterin, a pteridine, pyridine, a pyridine related species with at least one six-member ring, a pyrrole, a quinoline, or a thiazole, and mixtures thereof.

### Electrochemical Formate Cell Examples

An electrochemical bench scale cell with an electrode projected area of about 108 cm² was used for much of the bench scale test examples. The electrochemical cell was constructed consisting of two electrode compartments machined from 1.0 inch (2.54 cm) thick natural polypropylene. The outside dimensions of the anode and cathode compartments were 8 inches (20.32 cm) by 5 inches (12.70 cm) with an internal machined recess of 0.375 inches (0.9525 cm) deep and 3.0 inches (7.62 cm) wide by 6 inches (15.24 cm) tall with a flat gasket sealing area face being 1.0 inches (2.52 cm) wide. Two holes were drilled equispaced in the recess area to accept two electrode conductor posts that pass though the compartment thickness, and having two 0.25 inch (0.635 cm) drilled and tapped holes to accept a plastic fitting that passes through 0.25 inch (0.635 cm) conductor posts and seals around it to not allow liquids from the electrode compartment to escape to the outside. The electrode frames were drilled with an upper and lower flow distribution hole with 0.25 inch pipe threaded holes with plastic fittings installed to the outside of the cell frames at the top and bottom of the cells to provide flow into and out of the cell frame, and twelve 0.125 inch (0.3175 cm) holes were drilled through a 45 degree bevel at the edge of the recess area to the upper and lower flow distribution holes to provide an equal flow distribution across the surface of the flat electrodes and through the thickness of the high surface area electrodes of the compartments.

For the anode compartment cell frames, an anode with a thickness of 0.060 inch (0.1524 cm) and 2.875 inch (7.3025 cm) width and 5.875 inch (14.9225 cm) length with two 0.25 inch (0.635 cm) titanium diameter conductor posts welded on the backside were fitted through the two holes drilled in the electrode compartment recess area. The positioning depth of the anode in the recess depth was adjusted by adding plastic spacers behind the anode, and the edges of the anode to the cell frame recess were sealed using a medical grade epoxy. The electrocatalyst coating on the anode was a Water Star WS-32, an iridium oxide based coating on a 0.060 inch (0.1524 cm) thick titanium substrate, suitable for oxygen evolution in acids. In addition, the anode compartment also employed an anode folded screen (folded three times) that was placed between the anode and the membrane, which was a 0.010 inch (0.0254 cm) thick titanium expanded metal material from DeNora North America (EC626), with an iridium oxide based oxygen evolution coating, and used to provide a zero gap anode configuration (anode in contact with membrane), and to provide pressure against the membrane from the anode side which also had contact pressure from the cathode side.

For the cathode compartment cell frames, 316L stainless steel cathodes with a thickness of 0.080 inch (0.2032 cm) and 2.875 inch (7.3025 cm) width and 5.875 inch (14.9225 cm) length with two 0.25 inch (0.635 cm) diameter 316L SS conductor posts welded on the backside were fitted through the two holes drilled in the electrode compartment recess area. The positioning depth of the cathode in the recess depth was adjusted by adding plastic spacers behind the cathode, and the edges of the cathode to the cell frame recess were sealed using a fast cure medical grade epoxy.

A copper bar was connected between the two anode posts and the cathode posts to distribute the current to the electrode back plate. The cell was assembled and compressed using 0.25 inch (0.635 cm) bolts and nuts with a compression force of about 60 in-lbs force. Neoprene elastomer gaskets (0.0625 inch (0.159 cm) thick) were used as the sealing gaskets between the cell frames, frame spacers, and the membranes.

### EXAMPLE 1

The above cell was assembled with a 0.010 inch (0.0254 cm) thickness indium foil mounted on the 316L SS back conductor plate using a conductive silver epoxy. A multi-layered high surface area cathode, comprising an electrolessly applied indium layer of about 1 micron thickness that was deposited on a previously applied layer of electroless tin with a thickness of about 25 micron thickness onto a woven copper fiber substrate. The base copper fiber structure was a copper woven mesh obtained from an on-line internet supplier, PestMall.com (Anteater Pest Control Inc.). The copper fiber dimensions in the woven mesh had a thickness of 0.0025 inches (0.00635 cm) and width of 0.010 inches (0.0254 cm). The prepared high surface area cathode material was folded into a pad that was 1.25 inches (3.175 cm) thick and 6 inches (15.24 cm) high and 3 inches (7.62 cm) wide, which filled the cathode compartment dimensions and exceeded the adjusted compartment thickness (adding spacer) which was 0.875 inches (2.225 cm) by about 0.25 inches (0.635 cm). The prepared cathode had a calculated surface area of about 3,171 cm², for an area about 31 times the flat cathode plate area, with a 91% void volume, and specific surface area of 12.3 cm²/cm³. The cathode pad was compressible, and provided the spring force to make contact with the cathode plate and the membrane. Two layers of a very thin (0.002 inches thick) plastic screen with large 0.125 inch (0.3175 cm) holes were installed between the cathode mesh and the Nafion® 324 membrane. Neoprene gaskets (0.0625 inch (0.159 cm) thick) were used as the sealing gaskets between the cell frames and the membranes. The electrocatalyst coating on the anode in the anolyte compartment was a Water Star WS-32, an iridium oxide based coating, suitable for oxygen evolution in acids. In addition, the anode compartment also employed a three-folded screen that was placed between the anode and the membrane, which was a 0.010 inch (0.0254 cm) thick titanium expanded metal material from DeNora North America (EC626), with an iridium oxide based oxygen evolution coating, and used to provide a zero gap anode configuration (anode in contact with membrane), and to provide pressure against the membrane from the anode side which also had contact pressure from the cathode side.

The cell assembly was tightened down with stainless steel bolts, and mounted into the cell station, which has the same configuration as shown in Fig. 1 with a catholyte disengager, a centrifugal catholyte circulation pump, inlet cell pH and outlet cell pH sensors, a temperature sensor on the outlet solution stream. A 5 micron stainless steel frit filter was used to sparge carbon dioxide into the solution into the catholyte disengager volume to provide dissolved carbon dioxide into the recirculation stream back to the catholyte cell inlet.

The anolyte used was a dilute 5% by volume sulfuric acid solution, made from reagent grade 98% sulfuric acid and deionized water.

In this test run, the system was operated with a catholyte composition containing 0.4 molar potassium sulfate aqueous with 2 gm/L of potassium bicarbonate added, which was sparged with carbon dioxide to an ending pH of 6.60.

### Operating Conditions:

Batch Catholyte Recirculation Run
Anolyte Solution: 0.92 M H₂SO₄
Catholyte Solution: 0.4 M K₂SO₄, 0.14mM KHCO₃
Catholyte flow rate: 2.5 LPM
Catholyte flow velocity: 0.08 ft/sec
Applied cell current: 6 amps (6,000 mA)
Catholyte pH range: 5.5 - 6.6, controlled by periodic additions of potassium bicarbonate to the catholyte solution recirculation loop. Catholyte pH declined with time, and was controlled by the addition of potassium bicarbonate.

### Results:

Cell voltage range: 3.39 - 3.55 volts (slightly lower voltage when the catholyte pH drops)
Run time: 6 hours
Formate Faradaic yield: Steady between 32 - 35%, calculated taking samples periodically. The final formate concentration: 9,845 ppm

### EXAMPLE 2

The same cell as in Example 1 was used with the same cathode, which was only rinsed with water while in the electrochemical cell after the run was completed and then used for this run.

In this test run, the system was operated with a catholyte composition containing 0.375 molar potassium sulfate aqueous with 40 gm/L of potassium bicarbonate added, which was sparged with carbon dioxide to an ending pH of 7.05.

### Operating Conditions:

Batch Catholyte Recirculation Run
Anolyte Solution: 0.92 M H₂SO₄
Catholyte Solution: 0.4 M K₂SO₄, 0.4 M KHCO₃
Catholyte flow rate: 2.5 LPM
Catholyte flow velocity: 0.08 ft/sec
Applied cell current: 6 amps (6,000 mA)
Catholyte pH range: Dropping from 7.5 to 6.75 linearly with time during the run.

### Results:

Cell voltage range: 3.40 - 3.45 volts
Run time: 5.5 hours
Formate Faradaic yield: Steady at 52% and slowly declining with time to 44% as the catholyte pH dropped.
Final formate concentration: 13,078 ppm

### EXAMPLE 3

The same cell as in Examples 1 and 2 was used with the same cathode, which was only rinsed with water while in the electrochemical cell after the run was completed and then used for this run.

In this test run, the system was operated with a catholyte composition containing 0.200 molar potassium sulfate aqueous with 40 gm/L of potassium bicarbonate added, which was sparged with carbon dioxide to an ending pH of 7.10.

### Operating Conditions:

Batch Catholyte Recirculation Run
Anolyte Solution: 0.92 M H₂SO₄
Catholyte Solution: 0.2 M K₂SO₄, 0.4 M KHCO₃
Catholyte flow rate: 2.5 LPM
Catholyte flow velocity: 0.08 ft/sec
Applied cell current: 9 amps (9,000 mA)
Catholyte pH range: Dropping from 7.5 to 6.65 linearly with time during the run, and then additional solid KHCO₃ was added to the catholyte loop in 10 gm increments at the 210, 252, and 290 minute time marks which brought the pH back up to about a pH of 7 for the last part of the run.

### Results:

Cell voltage range: 3.98 - 3.80 volts
Run time: 6.2 hours
Formate Faradaic yield: 75% declining to 60% at a pH of 6.65, and then increasing to 75% upon the addition of solid potassium bicarbonate to the catholyte to the catholyte loop in 10 gm increments at the 210, 252, and 290 minute time marks and slowly declining down with time 68% as the catholyte pH dropped to 6.90.
Final formate concentration: 31,809 ppm.

### EXAMPLE 4

The same cell as in Examples 1, 2, and 3 was used with the same cathode, which was only rinsed with water while in the electrochemical cell after the run was completed and then used for this run.

In this test run, the system was operated with a catholyte composition containing 1.40 molar potassium bicarbonate (120 gm/L KHCO₃), which was sparged with carbon dioxide to an ending pH of 7.8.

### Operating Conditions:

Batch Catholyte Recirculation Run
Anolyte Solution: 0.92 M H₂SO₄
Catholyte Solution: 1.4 M KHCO₃
Catholyte flow rate: 2.6 LPM
Catholyte flow velocity: 0.09 ft/sec
Applied cell current: 11 amps (11,000 mA)
Catholyte pH range: Dropping from around 7.8 linearly with time during the run to a final pH of 7.48

### Results:

Cell voltage range: 3.98 - 3.82 volts
Run time: 6 hours
Formate Faradaic yield: 63% and settling down to about 54 - 55%.
Final formate concentration: 29,987 ppm.

### EXAMPLE 5

The same cell as in Examples 1, 2, and 3 was used, except for using 701 gm of tin shot (0.3 - 0.6 mm diameter) media with an electroless plated indium coating as the cathode. The cathode compartment thickness was 0.875 inches.

In this test run, the system was operated with a catholyte composition containing 1.40 molar potassium bicarbonate (120 gm/L KHCO₃), which was sparged with carbon dioxide to an ending pH of 8.0

The cell was operated in a batch condition with no overflow for the first 7.3 hrs, and then a 1.40 molar potassium bicarbonate feed was introduced into the catholyte at a rate of about 1.4 mL/min, with the overflow collected and measured, and a sample of the loop was collected for formate concentration analysis.

### Operating Conditions:

Batch Catholyte Recirculation Run
Anolyte Solution: 0.92 M H₂SO₄
Catholyte Solution: 1.4 M KHCO₃
Catholyte flow rate: 3.2 LPM
Applied cell current: 6 amps (6,000 mA)
Catholyte pH range: Dropping slowly from around a pH of 8 linearly with time during the run to a final pH of 7.50

### Results:

Cell voltage range: 3.98 - 3.82 volts
Run time: Batch mode: 7.3 hours
Feed and product overflow: 7.3 hours to end of run at 47 hours.

The formate Faradaic efficiency was between 42% and 52% during the batch run period where the formate concentration went up to 10,490 ppm. During the feed and overflow period, the periodic calculated efficiencies varied between 32% and 49%. The average conversion efficiency was about 44%. The formate concentration varied between 10,490 and 48,000 ppm during the feed and overflow period. The cell voltage began at around 4.05 volts, ending up at 3.80 volts.

### EXAMPLE 6

The same cell as in Examples 1, 2, and 3 was used, except for using 890.5 gm of tin shot (3 mm diameter) media and with a tin foil coating as the cathode. The cathode compartment thickness was 1.25 inches and the system was operated in a batch mode with no feed input. Carbon dioxide was sparged to saturate the solution in the catholyte disengager.

### Packed Tin Bed Cathode Detail:

Weight: 890.5 gm tin shot
Tin shot: 3 mm average size
Total compartment volume: 369 cm³
Calculated tin bead surface area: 4,498 cm²
Calculated packed bed cathode specific surface area: 12.2 cm²/cm³
Calculated packed bed void volume: 34.6%

In this test run, the system was operated with a catholyte composition containing 1.40 molar potassium bicarbonate (120 gm/L KHCO₃), which was sparged with CO₂ to an ending pH of about 8.0

The cell was operated in a batch condition with no overflow and a sample of the catholyte loop was collected for formate concentration analysis periodically.

### Operating Conditions:

Batch Catholyte Recirculation Run
Anolyte Solution: 0.92 M H₂SO₄
Catholyte Solution: 1.4 M KHCO₃
Catholyte flow rate: 3.0 LPM (upflow)
Catholyte flow velocity: 0.068 ft/sec
Applied cell current: 6 amps (6,000 mA)
Catholyte pH range: Increasing slowly from around a pH of 7.62 linearly with time during the run to a final pH of 7.73

### Results:

Cell voltage range: Started at 3.84 volts, and slowly declined to 3.42 volts
Run time: Batch mode, 19 hours

The formate Faradaic efficiency started at about 65% and declined after 10 hours to 36% and to about 18.3% after 19 hours. The final formate concentration ended up at 20,500 ppm at the end of the 19 hour run.

### EXAMPLE 7a

The same cell as in Examples 1, 2, and 3 was used, except for using 805 gm of indium coated tin shot (3 mm diameter) media and with a 0.010 inch (0.0254 cm) thickness indium foil mounted on the 316L SS back conductor plate using a conductive silver epoxy as the cathode. The cathode compartment thickness was 1.25 inches and the system was operated in a batch mode with no feed input. Carbon dioxide was sparged to saturate the solution in the catholyte disengager. The tin shot was electrolessly plated with indium in the same method as used in Examples 1 - 4 on the tin-coated copper mesh. The indium coating was estimated to be about 0.5 - 1.0 microns in thickness.

### Indium-Coated Tin Shot Packed Bed Cathode Detail:

Weight: 890.5 gm, indium coating on tin shot
Indium coated tin shot: 3 mm average size
Total compartment volume: 369 cm³
Calculated tin bead surface area: 4498 cm²
Packed bed cathode specific surface area: 12.2 cm²/cm³
Packed bed void volume: 34.6%

In this test run, the system was operated with a catholyte composition containing 1.40 molar potassium bicarbonate (120 gm/L KHCO₃), which was sparged with CO₂ to an ending pH of about 8.0

The cell was operated in a batch condition with no overflow and a sample of the catholyte loop was collected for formate concentration analysis periodically.

### Operating Conditions:

Batch Catholyte Recirculation Run
Anolyte Solution: 0.92 M H₂SO₄
Catholyte Solution: 1.4 M KHCO₃
Catholyte flow rate: 3.0 LPM (upflow)
Catholyte flow velocity: 0.068 ft/sec
Applied cell current: 6 amps (6,000 mA)
Catholyte pH range: Decreased slowly from around a pH of 7.86 linearly with time during the run to a final pH of 5.51

### Results:

Cell voltage range: Started at 3.68 volts, and slowly declined to 3.18 volts
Run time: Batch mode, 24 hours

The formate Faradaic efficiency started at about 100% and varied between 60% to 85%, ending at about 60% after 24 hours. The final formate concentration ended up at about 60,000 ppm at the end of the 24 hour run. Dilution error of the samples at the high formate concentrations may have provided the variability seen in the yield numbers.

### EXAMPLE 7b

The same cell as in Examples 1, 2, and 3 was used with a newly prepared indium on tin electrocatalyst coating on a copper mesh cathode. The prepared cathode had calculated surface areas of about 3,171 cm², for an area about 31 times the flat cathode plate area, with a 91% void volume, and specific surface area of 12.3 cm²/cm³.

In this test run, the system was operated with a catholyte composition containing 1.40 M potassium bicarbonate (120 gm/L KHCO₃), which was sparged with CO₂ to an ending pH of 7.8 before being used.

The cells were operated in a recirculating batch mode for the first 8 hours of operation to get the catholyte formate ion concentration up to about 20,000 ppm, and then a fresh feed of 1.4 M potassium bicarbonate was metered into the catholyte at a feed rate of about 1.2 mL/min. The overflow volume was collected and volume measured, and the overflow and catholyte loop sample were sampled and analyzed for formate by ion chromatography.

### Operating Conditions:

Cathode: Electroless indium on tin on a copper mesh substrate
Continuous Feed with Catholyte Recirculation Run - 11.5 days
Anolyte Solution: 0.92 M H₂SO₄
Catholyte Solution: 1.4 M KHCO₃
Catholyte flow rate: 3.2 LPM
Catholyte flow velocity: 0.09 ft/sec
Applied cell current: 6 amps (6,000 mA)

### Results:

Cell voltage versus time, displaying a stable operating voltage of about 3.45 volts over the 11.5 days after the initial start-up.
Continuous Run time: 11.5 days
Formate Concentration Versus Time: The formate concentration varied between 17,000 ppm and 28,000 ppm based on samples taken daily.
Formate Faradaic yield: The calculated formate current efficiency versus time measuring the formate yield from the collected samples. The formate yield varied between about 30% to 60% based on the daily interval samples taken.
Final formate concentration: About 28,000 ppm.
Catholyte pH: The catholyte pH change over the 11.5 days, slowly declined from a pH of 7.8 to a pH value of 7.5 at the end of the run. The feed rate was not changed during the run, but could have been slowly increased or decreased to maintain a constant catholyte pH in any optimum operating pH range.

### EXAMPLE 8

The same cell as in Examples 1, 2, and 3 was used with a newly prepared indium on tin electrocatalyst coating on a copper mesh cathode. The prepared cathode had calculated surface areas of about 3,171 cm², for an area about 31 times the flat cathode plate area, with a 91% void volume, and specific surface area of 12.3 cm²/cm³.

In this test run, the system was operated with a catholyte composition containing 1.40 M potassium bicarbonate (120 gm/L KHCO₃), which was sparged with CO₂ to an ending pH of 7.8 before being used.

The cells were operated in a recirculating batch mode for the first 8 hours of operation to get the catholyte formate ion concentration up to about 20,000 ppm, and then a fresh feed of 1.4 M potassium bicarbonate was metered into the catholyte at a feed rate of about 1.2 mL/min. The overflow volume was collected and volume measured, and the overflow and catholyte loop sample were sampled and analyzed for formate by ion chromatography.

### Operating Conditions:

Cathode: Electroless indium on tin on a copper mesh substrate
Continuous Feed with Catholyte Recirculation Run - 21 days
Anolyte Solution: 0.92 M H₂SO₄
Catholyte Solution: 1.4 M KHCO₃
Catholyte flow rate: 3.2 LPM
Catholyte flow velocity: 0.09 ft/sec
Applied cell current: 6 amps (6,000 mA)

### Results:

Cell voltage versus time: The cell showed a higher operating voltage of about 4.40 volts, higher than all of our other cells, because of an inadequate electrical contact pressure of the cathode against the indium foil conductor back plate. The cell maintained operation for an extended run.
Continuous Run time: 21 days

Formate Faradaic yield: The calculated formate current efficiency were measured versus time from the collected samples. The formate Faradaic current efficiency declined from about 50% - 60% from the first 4 days, averaged at about 4% - 45% in days 5 through 14, and slowly declined into the 20% - 25% range in days 17 through 20.

Formate Concentration Versus Time: The formate concentration averaged between about 20,000 - 30,000 ppm in days 1 through 16, and then declined to about 10,000 to 14,000 ppm in days 17 through 20. On day 21, 0.5 gm of indium (III) carbonate was added to the catholyte while the cell was still operating at the 6 ampere operating rate. The formate concentration in the catholyte operating loop was 11,330 ppm before the indium addition, which increased to 13,400 ppm after 8 hours, and increased to 14,100 ppm after 16 hours when the unit was shut down after 21 days of operation.

Catholyte pH: The catholyte pH change over the continuous operation period, which stabilized at about 7.6 after 2 days, and then operated in the 7.6 to 7.7 pH range until shutdown at about 20 days. The feed rate was not changed during the run, but could have been increased or decreased to maintain a constant pH operation in an optimum range.

### Example 9

The same electrochemical cell as used in examples 1, 2, 3, 8 and 9 was assembled for some further test runs. The only difference was that a previously used electroless indium on tin on copper mesh cathode operated during the runs was rinsed and was then electroplated with an additional indium surface coating layer using an indium sulfamate electroplating solution (Indium Corporation). The estimated applied indium coating thickness on the cathode was about 1 micron. Experiments conducted with the electroplated cathode provided formate Faradaic yield efficiencies of 60 - 65% with cell operating at 10 to 11 amperes, a current density of 90 - 100 ma/cm². The anolyte solution was 1 M sulfuric acid, and the catholyte solution was a 1.0 M KHCO₃ solution. Cell runs were conducted in multiple 3 hour batch runs, using a catholyte recirculation flowrate of 3 liters/min with carbon dioxide bubbled into the catholyte disengager.

### Example 10

The same cell as in Example 9 with the same indium electroplated cathode (previously used in several cell runs) was then used in an electrochemical system to demonstrate the reduction of carbon dioxide at the cathode to produce an alkali metal formate and co-producing chlorine at the anode from an alkali metal halide.

A 300 gm/L solution of sodium chloride was made up from reagent grade sodium chloride for use as an anolyte. The catholyte solution was a 0.25 M Na2CO₃ solution made from reagent grade potassium bicarbonate. The chlorine evolved from the anolyte disengager was absorbed in a sodium hydroxide solution containing 80 grams of NaOH in 250 mL of solution volume to produce sodium hypochlorite. Carbon dioxide was sparged into the catholyte solution disengager and the catholyte solution recirculation flowrate was 9 liters/min.

The electrochemical cell was operated for 2 hours at an applied current of 12 amperes (110 ma/cm² current density). The cell voltage started at about 5.16 volts and slowly declined to about 4.15 volts at the end of the run as the catholyte solution temperature increased from 24.2 °C to about 32.9 °C. The pH of the catholyte increased from a starting pH of about 7.75, and the catholyte pH was controlled to a maximum pH of about 8.10 by the addition of dilute 10 wt% HCl in 10 mL aliquots. A total of 80 mL of the 10 wt% acid was added to the catholyte during the run. At the end of the two hour run, the anolyte and catholyte were drained from the cell and collected for analysis. The sodium hydroxide solution absorber solution was analyzed for sodium hypochlorite.

The anolyte and sodium hypochlorite solutions were analyzed for chlorine content using a standard iodometric analysis method using potassium iodide and dilute sulfuric acid and using 0.1 N sodium thiosulfate for the titration. The final anolyte solution volume (280 mL) as found to contain 3.19 gm/L chlorine, for a total of 0.89 gm of chlorine. The NaOH absorber (260 mL final volume) contained a concentration of about 113.34 gm/L NaOCl, which is equivalent to 31.74 gm of NaOCl, or equivalent to 30.23 gm of chlorine. Thus, the total amount of chlorine collected from the cell anolyte and sodium hypochlorite absorber was determined to be 31.12 gm. The calculated theoretical amount of chlorine was determined to be 31.74 gm, so the calculated anolyte Faradaic efficiency of NaCl to chlorine was 98.0%.

The catholyte formate solution concentration was analyzed by ion chromatography, and was found to contain 2,221 ppm of formate, for a total of 2.24 gm as the formate ion. The calculated theoretical as formate ion was 20.61 gm, for a calculated formate Faradaic yield of 10.87%.

### Example 11

The same cell as in example 10 was used with the same cathode and anode (previously used in several cell runs) was then used in an electrochemical system to demonstrate the reduction of carbon dioxide at the cathode to produce an alkali metal formate and co-producing chlorine at the anode from a hydrogen halide.

A 10 wt% solution of hydrochloric acid was made up from reagent grade 37 wt% hydrochloric acid for use as an anolyte. The catholyte solution was a 1.0 M NaHCO₃ solution made from reagent grade potassium bicarbonate. The chlorine evolved from the anolyte disengager was absorbed in a sodium hydroxide solution absorber containing 41 grams of NaOH in 210 mL of solution volume to produce sodium hypochlorite. Carbon dioxide was sparged into the catholyte solution disengager and the catholyte solution recirculation flowrate was 9 liters/min.

The electrochemical cell was operated for 2 hours at an applied current of 12 amperes (110 ma/cm² current density). The cell voltage started at about 3.38 volts and slowly increased to about 3.53 volts at the end of the run as the catholyte solution temperature increased from 25.9 °C to about 30.2 °C. The pH of the catholyte increased from a starting pH of about 7.82, and the catholyte pH slowly increased to about a pH of 8.00 after 30 minutes, and then slowly declined to a pH of 7.80. At the end of the two hour run, the anolyte and catholyte were drained from the cell and collected for analysis. The sodium hydroxide solution absorber solution was analyzed for sodium hypochlorite.

The final anolyte solution volume (430 mL) as found to contain 3.01 gm/L chlorine, for a total of 1.30 gm of chlorine. The NaOH absorber (220 mL final volume) contained a concentration of about 130.27 gm/L NaOCl, which is equivalent to 28.66 gm of NaOCl, or equivalent to 27.30 gm of chlorine. Thus, the total amount of chlorine collected from the cell anolyte and sodium hypochlorite absorber was determined to be 28.60 gm. The calculated theoretical amount of chlorine was determined to be 31.74 gm, so the calculated anolyte Faradaic efficiency of NaCl to chlorine was 90.1%.

The final catholyte formate solution concentration was analyzed by ion chromatography, and was found to contain 4,811 ppm formate, for a total of 3.71 gm present as the formate ion. The calculated theoretical as formate ion was 20.61 gm, for a calculated formate Faradaic yield of 18.0%.

The use of a higher HCl concentration would improve the yield of HCl to chlorine. The final HCl concentration determined by acid-base titration was found to be 34.9 gm/L, which is about 3.5 wt% as HCl. In a typical cell operation, the concentration would be kept at a constant HCl concentration. The formate yield was lower than expected, and may have been due to some cathode coating degradation from the previous runs or during storage between runs.

### Thermal Conversion of Alkali Metal Formate To Oxalate Experiments

Experiments were conducted to determine some process conditions in the thermal conversion of alkali metal formate. Temperature, calcination time, and the addition of various catalysts that may improve the yields to oxalate were evaluated. Carbonate was determined by a standard two step titration method using standardized 0.1 N HCl as the titrant and phenolphthalein and bromocresol green as the pH indicators.

### Example 12

Table 1 shows the results of a set of experiments that were conducted in a thermal furnace using a nitrogen atmosphere. Experiments were conducted to evaluate the conditions and yields in the thermal conversion of alkali metal formate. Temperature was varied as well as calcination time, and the use of various catalysts were evaluated. These samples were prepared using reagent grade sodium formate crystal and the addition of reagent grade potassium hydroxide pellets. The chemical reagents were mixed together, and placed in a 100 mL nickel crucible. The crucible was calcined at the times and temperatures as given in Table 1. At 420°C, for time periods of 0.5 to 1.0 hrs, the percent yield of the potassium formate to potassium oxalate using the potassium hydroxide catalyst ranged from 73.71% to 78.53%. The oxalate content was analyzed by both permanganate titration and by Ion chromatography. At 440°C, the conversion yield to oxalate was about 77%.

**Table 1**

| Temperature °C | Calcination Time (hr) | Mass of Potassium Formate (gm) | Mass of Potassium Hydroxide Catalyst (gm) | Mass Percent of KOH (%) | Mass Loss (grams) | Percent Yield Potassium Oxalate (%) |
|---|---|---|---|---|---|---|
| 420 | 0.5 | 4.0888 | 0 | 0.0000 | 0.1838 | 7.62 |
| 420 | 0.5 | 4.1784 | 0.2244 | 5.3705 | 0.2115 | 76.11 |
| 420 | 0.5 | 4.0156 | 0.3348 | 8.3375 | 0.1742 | 73.95 |
| 420 | 0.75 | 4.0267 | 0.3246 | 8.0612 | 0.2397 | 73.71 |
| 420 | 1.0 | 4.1087 | 0.2268 | 5.5200 | 0.2121 | 78.53 |
| 440 | 0.5 | 4.2935 | 0.3323 | 7.7396 | 0.2482 | 77.17 |
| 440 | 1.0 | 4.0391 | 0.2008 | 4.9714 | 0.2329 | 77.55 |

### Example 13

Table 2 shows the results of the same procedure as in Example 12, except that potassium bicarbonate was added to potassium formate as a catalyst. The calcination temperature was 420°C for 30 minutes in a nitrogen atmosphere in the thermal oven.

**Table 2**

| Sample | Catalyst Wt% | % Oxalate |
|---|---|---|
| 1 | 10% KHCO₃ | 11.38 |
| 1 | 5% KHCO₃ | 14.44 |

### Example 14

Table 3 shows the results of the same procedure as in Example 12, KOH was added to potassium formate as a catalyst. The calcination temperature was 440°C for 30 minutes in a nitrogen atmosphere in the thermal oven. Table 4 shows the results using no KOH catalyst.

**Table 3**

| Sample # | Wt% KOH Catalyst | Potassium Oxalate Wt% | Potassium Carbonate Wt % |
|---|---|---|---|
| 1 | 2.0 | 80.4 | 13.0 |
| 2 | 2.0 | 72.8 | 22.6 |
| 3 | 2.0 | 71.7 | 20.7 |

**Table 4**

| Sample # | Wt% KOH Catalyst | Potassium Oxalate Wt% | Potassium Carbonate Wt % |
|---|---|---|---|
| 1 | 0 | 14.3 | 23.8 |
| 2 | 0 | 43.9 | 51.0 |

### Example 15

Table 5 shows the results of the same procedure as in Example 12, KOH was added to potassium formate as a catalyst. The calcination temperature was 480°C for 30 minutes in a nitrogen atmosphere in the thermal oven. Table 6 shows additional results using a KOH catalyst.

**Table 5**

| Sample # | Wt% KOH Catalyst | Potassium Oxalate Wt% | Potassium Carbonate Wt % |
|---|---|---|---|
| 1 | 2.0 | 75.9 | 21.6 |
| 2 | 2.0 | 75.7 | 21.7 |
| 3 | 2.0 | 74.6 | 21.5 |

**Table 6**

| Sample # | Wt% KOH Catalyst | Potassium Oxalate Wt% | Potassium Carbonate Wt % |
|---|---|---|---|
| 1 | 2.0 | 73.3 | 23.6 |
| 2 | 2.0 | 72.7 | 24.1 |
| 3 | 2.0 | 71.2 | 24.3 |

### Example 16

Table 7 shows the results of the same procedure as in Example 12, magnesium oxide powder was added to potassium formate as a catalyst. The calcination temperature was 420°C in a nitrogen atmosphere in the thermal oven.

**Table 7**

| Sample # | MgO Catalyst (gm) | Potassium Formate (gm) | MgO wt% | Calcination Time in Hrs | Potassium Oxalate Wt% |
|---|---|---|---|---|---|
| 1 | 0.7567 | 4.2279 | 17.9 | 0.75 | 19.9 |
| 2 | 0.3603 | 3.7827 | 9.5 | 1.0 | 54.3 |
| 3 | 0.5644 | 3.9544 | 14.3 | 1.5 | 48.3 |

### Example 17

Table 8 shows the results of the same procedure as in Example 12, sodium borohydride (NaBH₄) powder was added to potassium formate as a catalyst. The calcination temperature was 440°C in a nitrogen atmosphere in the thermal oven. Table 9 shows the results using NaBH₄ and KOH as co-catalysts at the same temperature.

**Table 8**

| Sample # | NaBH₄ Catalyst wt% | Calcination Time in min | Potassium Oxalate Wt% | Potassium Carbonate Wt% |
|---|---|---|---|---|
| 1 | 2.47 | 3.5 | 66.2 | 11.0 |
| 2 | 2.77 | 2.66 | 75.6 | 11.2 |

**Table 9**

| Sample # | Calcination Time | NaBH₄ wt% | KOH wt% | Potassium Oxalate wt% | Potassium Carbonate wt% |
|---|---|---|---|---|---|
| 1 | 5 min 25 sec | 2 | 2 | 74.2 | 8.5 |
| 2 | 3 min | 2.5 | 2.5 | 66.5 | 10.2 |
| 3 | 2 min 30 sec | 2.5 | 2.5 | 81.3 | 10.7 |
| 4 | 3 min 10 sec | 2.5 | 2.5 | 76.8 | 9.5 |
| 5 | 3 min | 2.77 | 0 | 75.6 | 11.2 |
| 6 | 2 min 30 sec | 2.5 | 3.0 | 81.3 | 11.1 |
| 7 | 2 min 30 sec | 2.5 | 2.5 | 80.5 | 11.8 |

### Example 18

Table 10 shows the results of the same procedure as in Example 12, except that sodium hydride (NaH) powder was added to sodium formate as a catalyst. The calcination temperature was 440°C in a nitrogen atmosphere in the thermal oven.

Table 11 shows the results using NaH added as a catalyst to potassium formate at various time and temperatures.

**Table 10**

| Sample # | Calcination Time (min) | NaH wt% | Calcination Temp °C | Potassium Oxalate wt% | Potassium Carbonate wt% |
|---|---|---|---|---|---|
| 1 | 3.75 | 2.86 | 440 | 85.49 | 7.36 |
| 2 | 3.75 | 2.86 | 440 | 84.48 | 7.14 |
| 3 | 3.75 | 2.59 | 440 | 89.12 | 5.32 |
| 4 | 4.25 | 2.96 | 430 | 86.99 | 7.15 |
| 5 | 3.25 | 2.19 | 430 | 89.46 | 5.14 |

**Table 11**

| Sample # | Calcination Time | Calcination Temp °C | NaH wt% | Potassium Oxalate wt% | Potassium Carbonate wt% |
|---|---|---|---|---|---|
| 1 | 19.66 min | 440 | 2.0 | 55.18 | 15.69 |
| 2 | 30 min | 400 | 2.5 | 47.68 | 22.96 |

### ALTERNATIVE EMBODIMENTS

Alternative anolyte solutions may be employed to generate chemical products such as bromine at the anode region of electrochemical cell 110, which may be used to brominate organics as intermediates in making ethanol, ethylene, and other chemicals based on bromine chemistry. The oxidation of sulfur compounds in the anolyte region, such as sodium sulfide or SO₂, or the direct or indirect oxidation of organics, and conducting the partial oxidation of organics, such as methanol to formaldehyde, are also contemplated.

Various alkali metal hydroxides may be employed at the electrochemical cell and/or a thermal reactor. For example, hydroxides of lithium, sodium, potassium, and rubidium, and cesium may be used. Further, alkaline earth metal hydroxides may also be used.

Thermal reactors may perform thermal intermolecular condensation reactions using alkali metal hydroxides. Such condensation reactions may include chemical reactions in which two molecules or moieties (functional groups) combine to form one single molecule, together with the loss of a small molecule. When two separate molecules may be reacted, the condensation may be termed intermolecular. Since the reaction occurs at elevated temperatures, the reactions may be characterized as "thermal intermolecular condensation step". If water may be lost, the reactions may be characterized as "thermal intermolecular dehydration step". These reactions may occur in an aqueous solution phase, such as with the reaction of CO with the alkali metal hydroxide, or as a melt of the alkali metal carboxylic acid and the alkali metal hydroxide in the thermal reaction.

The use of CO from other sources, such as from the production of syngas from methane or natural gas reforming may be employed. CO may also come from other sources, such as process waste streams, where may be it separated from carbon dioxide.

Alkali metal hydroxide concentration ranges may be 2% to 99%, more preferably 5 to 98% by weight. The alkali hydroxide may run in molar excess of the alkali metal carboxylic acid being thermally processed in the initial reaction mix or in a continuous process where they may be mixed together. The anticipated molar ratios of the alkali metal carboxylic acid to alkali metal hydroxide may range from 0.005 to 100, and more preferably 0.01 to 50. It may be preferable to use the least amount of alkali metal hydroxide as possible for the reaction to reduce the consumption of the hydroxide in the process.

A thermal intermolecular condensation process may also be conducted to produce higher carbon content carboxylic acids as well as converting the carboxylic acids into esters, amides, acid chlorides, and alcohols. In addition, the carboxylic acid products may be converted to the corresponding halide compounds using bromine, chlorine, and iodine.

Catalysts for the thermal conversion of the alkali metal formate may consist of various bases, including alkali metal hydroxide as well as other compounds that are bases. In addition, alkali metal and other hydrides may be used, since they also act as bases. Any other suitable catalysts that may be compatible with the formates in the calcination and provide high conversion yields are suitable for the process.

It is contemplated that method for production of dicarboxylic acid, such as oxalic acid, may include various steps performed by systems 100, 105, 200 and 205. It may be believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described may be merely explanation.

## Claims

1. A method for producing oxalic acid and co-products, comprising:
receiving an anolyte feed including a alkali metal halide at an anolyte region of a first electrochemical cell including an anode;
receiving a catholyte feed including carbon dioxide and an alkali metal bicarbonate at a catholyte region of the first electrochemical cell including a cathode;
applying an electrical potential between the anode and the cathode of the first electrochemical cell sufficient to reduce the carbon dioxide to formate and to oxidize the alkali metal halide to a halogen, to produce an anolyte product stream comprising halogen and a catholyte product stream,
splitting catholyte product stream in a solution stream comprising formate and alkali metal bicarbonate;
splitting solution stream comprising formate and alkali metal bicarbonate into a recycle stream and a second product stream,
converting the formate to an alkali metal oxalate via a thermal reaction;
receiving the alkali metal oxalate at a first electrochemical acidification electrolyzer;
converting the alkali metal oxalate to oxalic acid and co-producing alkali metal hydroxide, hydrogen, carbon dioxide and oxygen in the first electrochemical acidification electrolyzer;
acidifying at least a portion of recycle stream in a second electrochemical acidification electrolyzer to produce an acidified product stream to reenter the recycle stream to produce a solution stream; and
feeding solution stream to catholyte region.

2. The method of claim 1, wherein the second electrochemical acidification electrolyzer further produces hydrogen, oxygen and alkali metal hydroxide.

3. The method of claim 1 or 2, comprising feeding product stream to an evaporator-crystallizer to produce an alkali metal formate stream, an alkali metal bicarbonate stream slurry and an alkali metal bicarbonate stream product stream.

4. The method of any one of claims 1-3, further comprising providing a portion of the alkali metal bicarbonate stream slurry or alkali metal bicarbonate product stream to a reactor-dissolver and converting alkali metal carbonate to alkali metal bicarbonate using a carbon dioxide gas stream.

5. The method of any one of claims 1 to 4, further comprising providing an alkali metal bicarbonate stream from reactor-dissolver to recycle stream.

6. The method of any one of claims 1 to 5, wherein reactor-dissolver has an alkali metal hydroxide input stream, and wherein the alkali metal hydroxide is supplied from one or both of the electrochemical acidification electrolyzers.

7. The method of any one of claims 1 to 6, wherein the alkali metal halide is at least one of sodium chloride, potassium chloride, sodium bromide or potassium bromide.

8. The method of any one of claims 1 to 7, wherein the anolyte feed to the first electrochemical cell comprises saturated sodium chloride brine.

9. The method of claim 8, wherein anolyte product stream from anolyte compartment is separated in a chlorine gas stream and a sodium chloride-depleted brine solution, and wherein sodium chloride-depleted depleted brine solution stream is processed to produce a purified saturated sodium chloride brine solution stream which is provided to anolyte region of a first electrochemical cell.

10. The method of any one of claims 8-9, which produces one or more of sodium bicarbonate, sodium hydroxide and chlorine as by-products.

11. The method of claim 10, further comprising reacting the chlorine with an alkali metal hydroxide to produce an alkali metal hypochlorite product, preferably the generation of sodium hypochlorite by reaction with NaOH.

12. The method of any one of claims 1 to 11, wherein the converting the formate to the alkali metal oxalate via the thermal reaction includes receiving a catalyst, wherein preferably the catalyst is selected from the group consisting of alkali metal hydroxides, alkali metal ethoxides, alkali metal methoxides, and alkali metal hydrides.

13. The method of claim 12, further comprising converting the oxalic acid to an oxalic acid ester with an alcohol.

14. The method of claim 13, further comprising converting the oxalic acid ester to ethylene glycol by hydrogenation.

15. The method of claim 14, further comprising reacting the halogen with an organic compound to produce a halogenated organic compound, wherein preferably the organic compound is at least one of ethylene or propylene.
